# EUROPEAN PATENT APPLICATION

(11) **EP 4 770 145 A1**
(43) Date of publication of application: **01.07.2026**
(21) Application number: 24872285.2
(22) Date of filing: 25.09.2024
(51) Int. Cl.: H04W 4/06, H04W 72/56, H04W 76/27, H04W 76/40

(54) **COMMUNICATION METHOD, USER EQUIPMENT, AND NETWORK NODE**

(30) Priority: 25.09.2023 US 202363540261 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2024/034204
(87) International publication number: WO 2025/070499

(57) **Abstract**

A communication method used in a mobile communication system for providing a multicast broadcast service (MBS) includes: starting, by a user equipment in an RRC inactive state, an RRC connection resume procedure with respect to a network node based on reception quality during multicast reception in the user equipment having deteriorated and/or the user equipment needing to acquire a multicast reception configuration from the network node; and transmitting, by the user equipment, an RRC resume request message including an information element related to a cause of an RRC resume to the network node. The information element is first information indicating the RRC resume related to multicast reception, second information indicating mobile terminated (MT) access, or third information indicating multimedia priority access (MPS) priority access.

## Description

### TECHNICAL FIELD

The present disclosure relates to a communication method, a user equipment, and a network node used in a mobile communication system.

### BACKGROUND OF INVENTION

In the 3rd generation partnership project (3GPP) (registered trademark; the same applies hereinafter), a technical specification of new radio (NR), which is a fifth-generation (5G) radio access technology, is defined. NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of SG/NR.

In 3GPP Release 17, MBS multicast reception (i.e., multicast reception) is possible only for a user equipment in a radio resource control (RRC) connected state (see, for example, Non-Patent Document 1). On the other hand, in 3GPP Release 18, technical specifications are scheduled to be extended so that a user equipment in an RRC inactive state can perform multicast reception.

### CITATION LIST

### NON-PATENT LITERATURE

Non-Patent Literature 1: 3GPP Technical Specification: TS 38.300 V17.5.0

### SUMMARY

A communication method according to a first aspect is a communication method used in a mobile communication system for providing a multicast broadcast service (MBS), the communication method including: starting, by a user equipment in a radio resource control (RRC) inactive state that is participating in a multicast session, an RRC connection resume procedure with respect to a network node based on reception quality falling below a threshold value; and transmitting, by the user equipment, an RRC resume request message including an information element related to a cause of an RRC resume to the network node. The information element is information indicating mobile terminated (MT) access or information indicating multimedia priority access (MPS) priority access.

A communication method according to a second aspect is a communication method used in a mobile communication system for providing a multicast broadcast service (MBS), the communication method including: starting, by a user equipment in an RRC inactive state, an RRC connection resume procedure with respect to a network node based on reception quality during multicast reception in the user equipment having deteriorated and/or the user equipment needing to acquire a multicast reception configuration from the network node; and transmitting, by the user equipment, an RRC resume request message including an information element related to a cause of an RRC resume to the network node. The information element is first information indicating the RRC resume related to multicast reception, second information indicating mobile terminated (MT) access, or third information indicating multimedia priority access (MPS) priority access.

A user equipment according to a third aspect is a user equipment used in a mobile communication system for providing a multicast broadcast service (MBS), the user equipment including: a controller configured to start an RRC connection resume procedure with respect to a network node, based on reception quality during multicast reception in the user equipment having deteriorated and/or the user equipment needing to acquire a multicast reception configuration from the network node in an RRC inactive state; and a transmitter configured to transmit, to the network node, an RRC resume request message including an information element related to a cause of an RRC resume. The information element is first information indicating the RRC resume related to multicast reception, second information indicating mobile terminated (MT) access, or third information indicating multimedia priority access (MPS) priority access.

A network node according to a fourth aspect is a network node used in a mobile communication system for providing a multicast broadcast service (MBS), the network node including: a receiver configured to receive, from a user equipment in an RRC inactive state, an RRC resume request message including an information element related to a cause of an RRC resume, based on reception quality during multicast reception in the user equipment having deteriorated and/or the user equipment needing to acquire a multicast reception configuration from the network node. The information element is first information indicating the RRC resume related to multicast reception, second information indicating mobile terminated (MT) access, or third information indicating multimedia priority access (MPS) priority access.

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to an embodiment.
FIG. 3 is a diagram illustrating a configuration example of a gNB (network node) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of an operation of a UE according to an embodiment.
FIG. 7 is a diagram illustrating an example of a first operation pattern of the mobile communication system according to the embodiment.
FIG. 8 is a diagram illustrating another example of the first operation pattern of the mobile communication system according to the embodiment
FIG. 9 is a diagram illustrating an example of a second operation pattern of a mobile communication system according to the embodiment.
FIG. 10 is a diagram illustrating another example of the second operation pattern of the mobile communication system according to the embodiment

### DESCRIPTION OF EMBODIMENTS

According to an embodiment, a mobile communication system is described with reference to the drawings. In the description of the drawings, the same or similar parts are denoted by the same or similar reference signs.

### (1) System Configuration Example

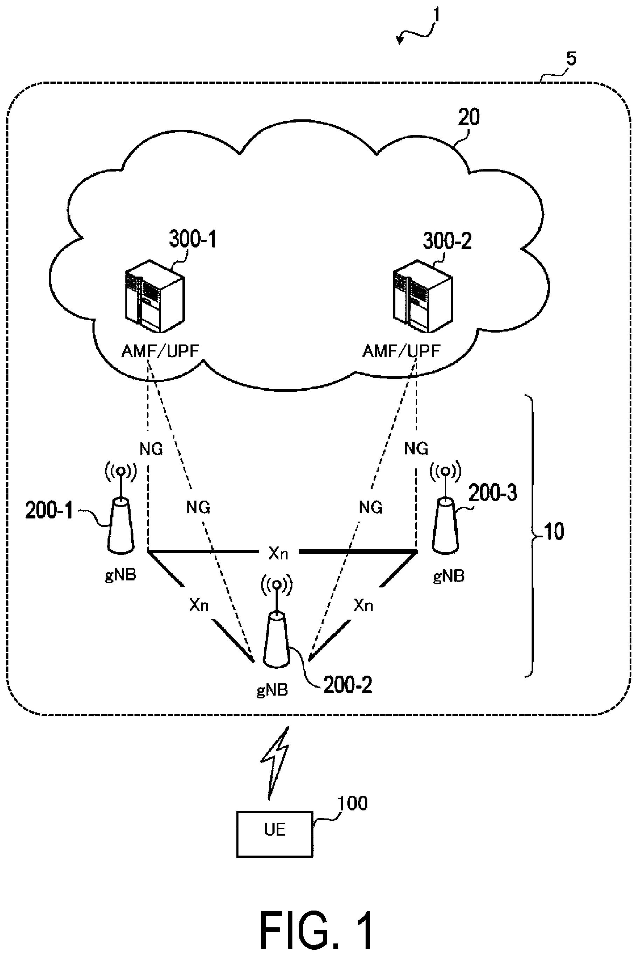

FIG. 1 is a diagram illustrating a configuration example of a mobile communication system 1 according to the embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 configure a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes a base station 200, which is a type of network node (referred to as a gNB in a 5G system). The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

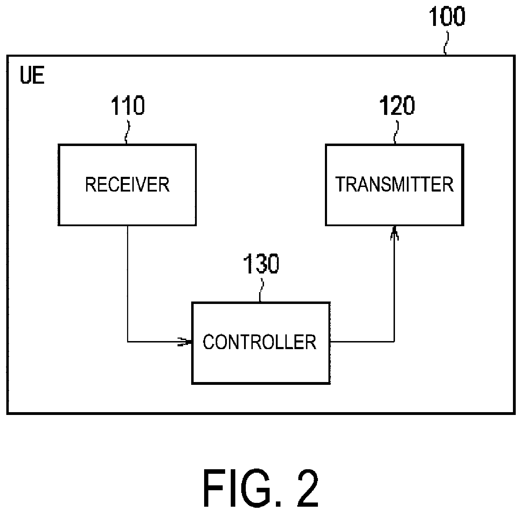

FIG. 2 is a diagram illustrating a configuration example of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. Such processing includes processing of respective layers to be described later. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a central processing unit (CPU). The baseband processor performs modulation and demodulation, coding and decoding, and the like of a baseband signal. The CPU executes the program stored in the memory to thereby perform various types of processing.

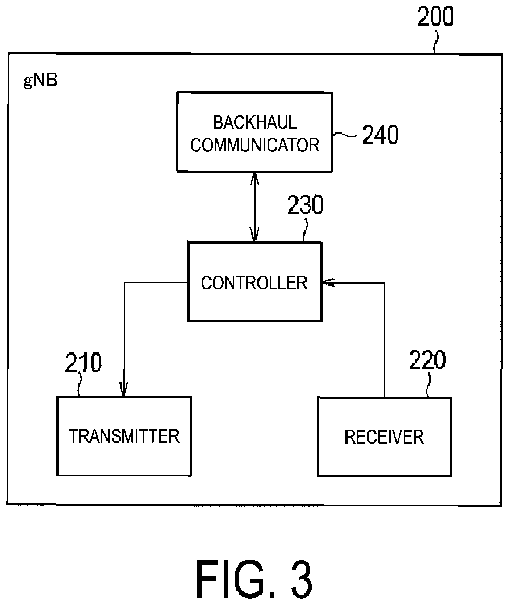

FIG. 3 is a diagram illustrating a configuration example of a gNB 200 (network node) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna.

The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may be also performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface which is an interface between a base station and the core network. Note that the gNB 200 may include a Central Unit (CU) and a Distributed Unit (DU) (i.e., functions are divided), and both units may be connected via an F1 interface that is a fronthaul interface.

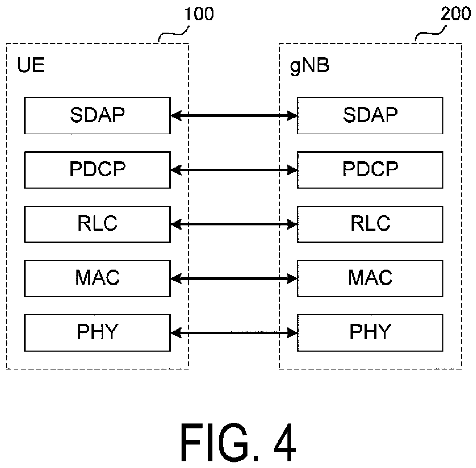

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. CRC parity bits scrambled by the RNTI are added to the DCI transmitted from the gNB 200.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

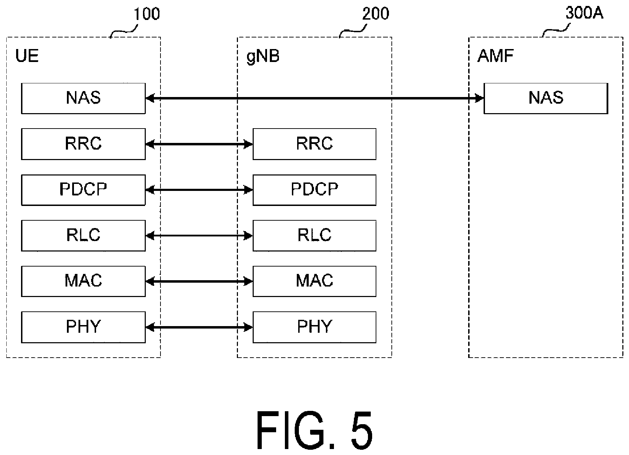

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. The layer below the NAS layer is referred to as an AS layer (also simply referred to as "AS").

### (2) Overview of MBS

The mobile communication system 1 can perform delivery with high resource efficiency by using the multicast/broadcast service (MBS).

### (2.1) MBS Broadcast

In a case of the broadcast communication services (also referred to as "MBS broadcast"), the same service and the same specific content data are provided simultaneously to every UE 100 in a geographic area. That is, every UE 100 in the broadcast service area is permitted to receive the data. The broadcast communication services are delivered to the UE 100 using a broadcast session that is a type of MBS session. The UE 100 can receive the broadcast session in any state of the RRC idle state, the RRC inactive state, and the RRC connected state.

Point-to-Multipoint (PTM) delivery is applied to the broadcast communication service. For the PTM transmission, the gNB 200 delivers a single copy of an MBS packet to a set (group) of a plurality of UEs 100. For example, the gNB 200 uses a group-common PDCCH with a cyclic redundancy code (CRC) scrambled by a group RNTI (G-RNTI) that is a group-common RNTI to schedule a group-common PDSCH scrambled by the G-RNTI.

For the broadcast communication service, the UE 100 receives a broadcast session in the following procedure. First, the UE 100 receives system information block type 20 (SIB20) from the gNB 200. The SIB20 includes a configuration of a multicast control channel (MCCH), which is a type of logical channel. Second, the UE 100 receives the MCCH from the gNB 200 based on the SIB20. The MCCH includes a PTM configuration. The PTM configuration transmits a configuration for a multicast traffic channel (MTCH) (MTCH configuration), which is a type of logical channel, and a configuration of a broadcast multicast radio bearer (MRB), which is an MRB for broadcast session. The information transmitted by the MCCH may be referred to as MBS broadcast control information. Third, the UE 100 receives the MTCH based on the MCCH. The MTCH transmits a broadcast session (specifically, MBS data belonging to the broadcast session).

An MCCH is a PTM downlink channel for transmitting MBS broadcast control information associated with one or more MTCHs from the network 5 to the UE 100. An MTCH is a PTM downlink channel for transmitting MBS data of either a multicast session or a broadcast session from the network 5 to the UE 100.

### (2.2) MBS Multicast

For a multicast communication service (also referred to as "MBS multicast"), the same service and the same specific content data are simultaneously provided to a specific UE set. That is, not every UE 100 in the multicast service area is permitted to receive data. The multicast communication service is delivered to the UE 100 using a multicast session that is a type of MBS session.

The UE 100 can receive a multicast session only after joining the multicast session (session join). The joining the multicast session may mean that the UE 100 is registered as being capable of receiving the multicast session in the network 5 (the CN 20).

For the multicast communication service, in 3GPP Release 17, only the UE 100 in the RRC connected state can receive a multicast session. On the other hand, in 3GPP Release 18, the specifications are extended such that the UE 100 in an RRC inactive state is also capable of receiving a multicast session.

### (2.2.1) Multicast Reception in RRC Connected State

The UE 100 in the RRC connected state can receive a multicast session (specifically, MBS data belonging to a multicast session) by using mechanisms such as Point-to-Point (PTP) delivery and/or Point-to-Multipoint (PTM) delivery.

For the multicast communication service, the UE 100 in the RRC connected state receives a multicast session in the following procedure. First, the UE 100 receives an RRC Reconfiguration message from the gNB 200. The RRC Reconfiguration message is a message transmitted on a dedicated control channel (DCCH). The RRC Reconfiguration message transmits a configuration for an MTCH for multicast session reception (MTCH configuration) and a configuration of a multicast MRB which is an MRB for multicast session. Second, the UE 100 receives an MTCH based on the RRC Reconfiguration message. The MTCH transmits a multicast session (specifically, MBS data belonging to the multicast session).

### (2.2.2) Multicast Reception in RRC inactive state

The UE 100 in the RRC inactive state may receive a multicast session (specifically, MBS data belonging to the multicast session) by using the mechanism of the PTM delivery.

For the multicast communication service, the UE 100 in the RRC inactive state can receive a multicast session in the following procedure. First, the UE 100 in the RRC inactive state receives a newly introduced system information block (also referred to as a "SIBx") from the gNB 200. SIBx includes a configuration of a newly introduced MCCH (also referred to as a "multicast MCCH"). Second, the UE 100 in the RRC inactive state receives a multicast MCCH based on SIBx from the gNB 200. The multicast MCCH includes a PTM configuration. The PTM configuration transmits a configuration regarding an MTCH for multicast session reception (MTCH configuration) and a configuration of a multicast inactive MRB which is an MRB for multicast session reception in the RRC inactive state (multicast inactive MRB configuration). The MTCH configuration may be included in the multicast inactive MRB configuration. Third, the UE 100 in the RRC inactive state receives an MTCH based on the multicast MCCH. The MTCH transmits a multicast session, specifically, MBS data belonging to the multicast session(that is, multicast data).

When the gNB 200 configures the UE 100 to receive a multicast session in the RRC inactive state, the gNB 200 can transmit the PTM configuration (multicast inactive MRB configuration) to the UE 100 using an RRC release message including a suspend configuration. In this case, when the UE 100 receives the RRC release message including the PTM configuration from the gNB 200, the UE 100 transitions to the RRC inactive state and performs reception of the multicast session (multicast reception) in the RRC inactive state.

### (2.2.3) Group Notification

In a case in which there temporarily is no data to transmit to the UE 100 in the activated multicast session, the gNB 200 may cause the UE 100 to transition to the RRC inactive state. When the multicast session is deactivated, the gNB 200 may cause the UE 100 to transition to the RRC idle state or the RRC inactive state.

The gNB 200 supporting the MBS notifies the UE 100 in the RRC idle state or the RRC inactive state by using a group notification mechanism when the multicast session is activated by the CN 20. The gNB 200 that supports MBS may perform a notification to the UE 100 in the RRC inactive state using a group notification mechanism when a multicast session has been activated and the gNB 200 has multicast session data to deliver.

Upon receiving the group notification, the UE 100 reconnects to the network 5 or resumes the connection to transition to the RRC connected state. The group notification is processed with a paging RNTI (P-RNTI) on the PDCCH, and a paging channel is monitored by the UE 100.

A paging message used for the group notification includes session identifiers (MBS session IDs) for paging all UEs 100 in the RRC idle state and the RRC inactive state that have joined the associated MBS multicast session. That is, the UE 100 is not individually paged.

When the UE 100 transitions to the RRC connected state, the UE 100 may stop monitoring the group notification associated with the particular multicast session. That is, the UE 100 stops checking the MBS session ID in the paging message. The UE 100 does not monitor the group notification in a case in which the UE 100 leaves the multicast session, the network 5 requests the UE 100 to leave the multicast session, or the network 5 releases the multicast session.

Note that the group notification may be performed on the MCCH or may be performed with an MCCH Change Notification. In the case of using the MCCH, the determination may be made depending on whether the MTCH configuration of the MBS session of interest is present in the MCCH. In a case of using the MCCH Change Notification, the group notification may be made in a predetermined bit of the DCI.

### (3)Operation of Mobile Communication System

An operation of the mobile communication system 1 according to an embodiment will be described.

### (3.1) Overview of Operation

In the embodiment, a scenario is assumed in which the UE 100 in the RRC inactive state starts the RRC connection resume (also referred to as "RRC Resume") in association with the multicast session (multicast reception).

The UE 100 transmits an RRC resume request message to the gNB 200 in an RRC connection resume procedure. The RRC resume request message includes a resume cause, which is an information element related to a cause of RRC resume. The gNB 200 that has received the RRC resume request message can identify the cause of RRC resume of the UE 100 based on the resume cause. Accordingly, for example, whether to accept the RRC resume request under network congestion can be determined based on the resume cause.

However, when the UE 100 in the RRC inactive state starts an RRC connection resume in association with the multicast session (multicast reception), there is a problem in that it is unclear what information the UE 100 should set in the resume cause. In the following embodiment, an operation for enabling the UE 100 to set appropriate information in the resume cause in such a case will be described.

Here, a case in which the UE 100 in the RRC inactive state starts the RRC connection resume in association with the multicast session (multicast reception) is a case in which reception quality during multicast reception in the UE 100 has deteriorated and/or a case in which the UE 100 needs to acquire multicast reception configuration (PTM configuration) from the gNB 200.

In the embodiment, the case in which reception quality during multicast reception in the UE 100 has deteriorated is a case in which a reference signal received power (RSRP) measured for a serving cell by the UE 100 falls below an RSRP threshold value configured for the UE 100 by the network 5 and/or a case in which a reference signal received quality (RSRQ) measured by for the serving cell the UE 100 falls below an RSRQ threshold value configured for the UE 100 by the network 5. Alternatively, the case in which reception quality during multicast reception in the UE 100 has deteriorated may be a case in which a bit error rate (BER) measured for a multicast session by the UE 100 exceeds a BER threshold value configured for the UE 100 by the network 5 and/or a case in which a block error rate (BLER) measured by for the multicast session the UE 100 exceeds a BLER threshold value configured for the UE 100 by the network 5.

The case in which the UE 100 needs to acquire the multicast reception configuration from the gNB 200 may be a case in which the UE 100 has not received multicast reception configuration of a multicast session in which the UE 100 has participated in an RRC release message and the serving cell does not provide the multicast reception configuration via the multicast MCCH, which is a case in which the UE 100 receives a paging message (group notification) indicating activation of the multicast session from the serving cell. The case in which the UE 100 needs to acquire the multicast reception configuration from the gNB 200 may be a case in which the UE 100 performs cell reselection from the first cell to the second cell, that is, the second cell (the reselected cell) does not provide the multicast reception configuration of the multicast session participated by the UE 100 via the multicast MCCH.

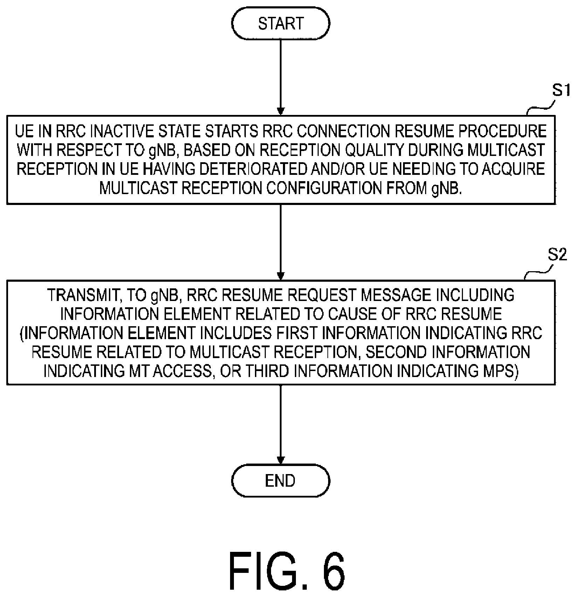

FIG 6 is a diagram illustrating an overview of an operation of the UE 100 according to the embodiment.

In step S1, the UE 100 in the RRC inactive state starts the RRC connection resume procedure with respect to the gNB 200 based on the reception quality during multicast reception in the UE 100 having deteriorated and/or the UE 100 needing to acquire the multicast reception configuration from the gNB 200.

In step S2, the UE 100 transmits an RRC resume request message including resume cause, which is an information element related to a cause of the RRC resume, to the gNB 200. The information element (resume cause) is first information indicating RRC resume related to multicast reception, second information indicating mobile terminated (MT) access, or third information indicating multimedia priority access (MPS) priority access. The MT access may be access based on incoming communication (that is, paging reception). The MPS may be a service that permits communication even during network congestion. The MPS priority access may be priority access by MPS.

Thus, when the UE 100 in the RRC inactive state starts the RRC connection resume in association with the multicast session (multicast reception), the UE 100 transmits, to the gNB 200, an RRC resume request message including, as the resume cause, the first information indicating the RRC resume related to the multicast reception, the second information indicating the MT access, or the third information indicating the MPS.

The first information is a new resume cause that is not defined in technical specifications up to Release 17 of 3GPP standards. By introducing such a new resume cause, the gNB 200 can ascertain the RRC resume related to the multicast reception. For example, the gNB 200 that has received the RRC resume request message including the first information as the resume cause may make an acceptance determination so that the RRC resume request is preferentially accepted. The gNB 200 that has received the RRC resume request message including the first information as the resume cause may transmit an RRC release message including the multicast reception configuration of the multicast session in which the UE 100 has participated to the UE 100, in response to the reception of the RRC resume request message, and may maintain the UE 100 in the RRC inactive state.

The first information may be different between the case in which reception quality during multicast reception in the UE 100 has deteriorated and the case in which the UE 100 needs to acquire the multicast reception configuration from the gNB 200. For example, a new resume cause in a case in which reception quality during multicast reception in the UE 100 has deteriorated may be "Multicast Quality", and a new resume cause in the case in which the UE 100 needs to acquire the multicast reception configuration from the gNB 200 may be "Multicast Configuration."

Meanwhile, the second information and the third information are existing resume causes already defined in technical specifications up to Release 17 of 3GPP standards. By reusing such existing resume causes, it becomes easy to minimize specification changes. The second information and the third information may be existing resume causes having higher priority than other existing resume causes. The second information and the third information may be existing resume causes for which the gNB 200 preferentially accepts an RRC resume request. This makes it possible to suppress the RRC connection resume associated with the multicast session (multicast reception) being rejected by the gNB 200. The third information may be an existing resume cause having higher priority than the second information.

The UE 100 that performs the operation as illustrated in FIG 6 includes a controller 130 that starts the RRC connection resume procedure with respect to the gNB 200 based on the reception quality during multicast reception in the UE 100 having deteriorated and/or based on the UE 100 needing to acquire the multicast reception configuration from the gNB 200 in the RRC inactive state, and a transmitter 120 that transmits an RRC resume request message including an information element related to a cause of RRC resume to the gNB 200. The information element is the first information indicating the RRC resume related to the multicast reception, the second information indicating the MT access, or the third information indicating the MPS. On the other hand, the gNB 200 includes a receiver 220 that receives, from the UE 100 in the RRC inactive state, an RRC resume request message including the information element based on the reception quality during multicast reception in the UE 100 having deteriorated and/or the UE 100 needing to acquire the multicast reception configuration from the gNB 200.

The UE 100 may start the RRC connection resume procedure and transmit an RRC resume request message including any of the first to third information as an information element to the gNB 200 further based on the fact that the multicast reception in the RRC inactive state is permitted by the gNB 200. The fact that the multicast reception in the RRC inactive state is permitted by the gNB 200 may mean that permission for the multicast reception in the RRC inactive state for the multicast session in which the UE 100 has participated is indicated in an RRC release message (suspend configuration). Accordingly, it becomes easy to make the operation of the UE 100 regarding the resume cause when the multicast reception in the RRC inactive state is permitted by the gNB 200 different from an existing operation.

In a first operation pattern of the embodiment, the UE 100 in the RRC inactive state may receive the paging message (group notification) indicating activation of the multicast session in which the UE 100 has participated from the gNB 200. In step S1, when the UE 100 receives the paging message and the UE 100 does not have the multicast reception configuration corresponding to the multicast session in which the UE 100 has participated, the UE 100 may start the RRC connection resume procedure. In step S2, the UE 100 may transmit an RRC resume request message including the first information (new resume cause) as an information element to the gNB 200.

In a second operation pattern of the embodiment, in step S2, the UE 100 transmits the RRC resume request message including the second information or the third information (existing resume cause) as an information element to the gNB 200.

In the second operation pattern of the embodiment, when the UE 100 receives no paging message indicating activation of the multicast session in which the UE 100 has participated, the UE 100 may start the RRC connection resume procedure and transmit an RRC resume request message including the second information or the third information as the information element to the gNB 200.

In the second operation pattern of the embodiment, the UE 100 may start the RRC connection resume procedure based on the fact that the UE 100 is performing the multicast reception in the RRC inactive state and transmit the RRC resume request message including the second information or the third information as the information element to the gNB 200. The UE 100 may start the RRC connection resume procedure based on the fact that the UE 100 is performing the multicast reception in the RRC inactive state and that reception quality during multicast reception has deteriorated, and may transmit the RRC resume request message including the second information or the third information as the information element to the gNB 200.

In the second operation pattern of the embodiment, the UE 100 may start the RRC connection resume procedure based on the UE 100 being unable to acquire the multicast reception configuration from a cell reselected through cell reselection and may transmit the RRC resume request message including the second information or the third information as the information element to the gNB 200.

### (3.2) Specific Operation Examples

As specific examples of operation of the mobile communication system 1, the first operation pattern and the second operation pattern will be described. For the first operation pattern and the second operation pattern, each operation pattern may be implemented independently or the two operation patterns may be implemented in combination.

### (3.2.1) First Operation Pattern

In the first operation pattern, when the UE 100 receives a group notification (paging message) and needs to transition to the RRC connected state to receive the multicast reception configuration (PTM configuration), the UE 100 sets the first information (new resume cause) in the RRC resume request message. Such an operation may be applicable only when the multicast session reception in the RRC inactive state is permitted by the gNB 200.

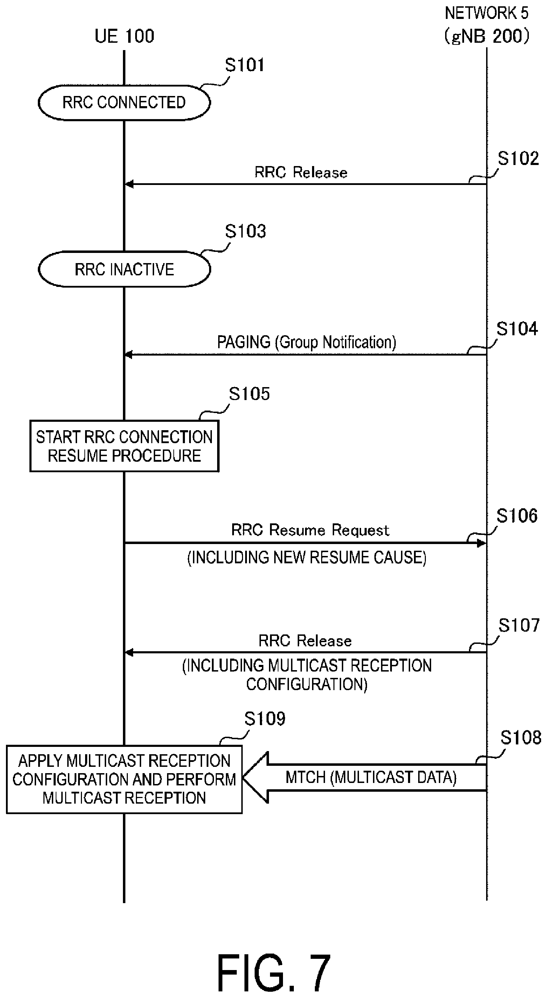

FIG. 7 is a diagram illustrating an example of a first operation pattern of the mobile communication system 1 according to an embodiment.

In step S101, the UE 100 is in the RRC connected state in a cell of the gNB 200. It is assumed that the UE 100 has participated in a certain multicast session, and the multicast session is also referred to as a multicast session in which the UE 100 has participated. "Having participated in the multicast session" may mean a state in which the UE 100 is registered in the network 5 (CN 20) as the UE 100 that receives the multicast session. In the first operation pattern, the multicast session in which UE 100 has participated is assumed to be activated after the UE 100 transitions to the RRC inactive state.

In step S102, the gNB 200 transmits, to the UE 100, the RRC release message including suspend configuration, that is, the RRC release message for causing the UE 100 to transition to the RRC inactive state. The UE 100 receives the RRC release message.

The RRC release message of step S102 includes at least one of the following information 1) to 3).
1) Information for permitting (or instructing) the multicast reception in the RRC inactive state. The information may be provided for each multicast session. The information may be information indicating the multicast session in which the UE 100 has participated, for which multicast reception in the RRC inactive state is permitted (or instructed).
(2) Information for instructing use of a new resume cause (first information).
(3) Information for notifying that the multicast session in which the UE 100 has participated is not active (that is, is inactive).

The information may be information indicating, for each multicast session in which the UE 100 has participated, whether the multicast session is active. Whether the multicast session is active may be equivalent to whether reception of MBS data (MTCH) corresponding to the multicast session is to be immediately started.

However, the RRC release message in step S102 does not include the multicast reception configuration (PTM configuration) for multicast reception in the RRC inactive state.

In step S103, the UE 100 transitions to the RRC inactive state in response to reception of the RRC release message of step S102.

In step S104, in response to activation of the multicast session in which the UE 100 has participated, the gNB 200 transmits a paging message (group notification) including a session identifier (MBS session ID) of the multicast session in which the UE 100 has participated. The UE 100 receives the paging message (group notification).

In step S105, the UE 100 starts the RRC connection resume procedure in response to the reception of the paging message of step S104. Specifically, the UE 100 starts the RRC connection resume procedure in response to the session identifier of the multicast session in which the UE 100 has participated being included in the paging message and the UE 100 having no multicast reception configuration for the multicast session in which the UE 100 has participated. Having no multicast reception configuration may mean that the UE 100 has not received the multicast reception configuration in the RRC release message of step S132 and that the serving cell does not broadcast the multicast reception configuration via the multicast MCCH.

In step S106, the UE 100 sets the first information (new resume cause) in the RRC resume request message and transmits the RRC resume request message to the gNB 200. The gNB 200 receives the RRC resume request message. The UE 100 may set the first information (new resume cause) in the RRC resume request message in response to the multicast reception in the RRC inactive state being permitted (or instructed) in the RRC release message of step S102 or in response to being instructed to use the new resume cause (first information). The first information may be, for example, "multicast configuration for RRC inactive." The first information may be a cause indicating not being related to unicast communication, or a cause indicating being related only to multicast communication.

In step S107, in response to the reception of the RRC resume request message including the first information (new resume cause) of step S106, the gNB 200 transmits the RRC release message including the multicast reception configuration and the suspend configuration of the multicast session in which the UE 100 has participated to the UE 100. That is, the gNB 200 provides, to the UE 100, the multicast reception configuration in the RRC release message without causing the UE 100 to transition to the RRC connected state. The UE 100 receives the RRC release message.

In step S108, the gNB 200 transmits MBS data (multicast data) of the multicast session in which the UE 100 has participated on the MTCH.

In step S109, the UE 100 applies the multicast reception configuration of step S107 and performs multicast reception in the RRC inactive state. Specifically, the UE 100 receives the MBS data (multicast data) of the multicast session participated by the UE 100 on MTCH from the gNB 200.

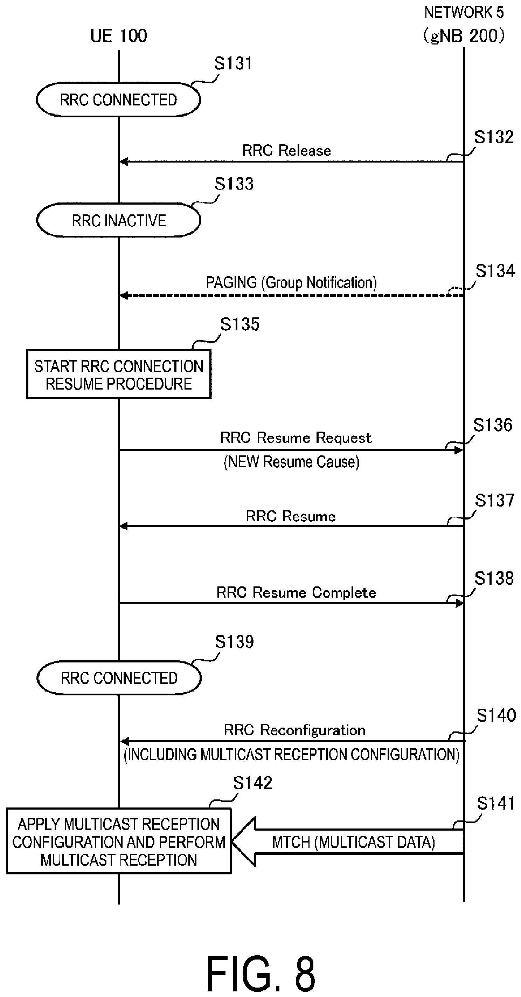

FIG. 8 is a diagram illustrating another example of the first operation pattern of the mobile communication system 1 according to the embodiment. Differences from the operation example of FIG. 7 are described herein.

Operations of steps S131 to S136 are similar to those of the operation example of FIG. 7. However, the operation of step S134 may be omitted. For example, the UE 100 may start the RRC connection resume procedure in response to the reception quality during multicast reception in the UE 100 having deteriorated (step S135). The first information (new resume cause) included in the RRC resume request message of step S136 may be information indicating degradation of multicast reception quality.

In step S137, the gNB 200 determines that the UE 100 transitions to the RRC connected state in response to the reception of the RRC resume request message including the first information (new resume cause) of step S136, and transmits an RRC resume message to the UE 100. The UE 100 receives the RRC resume message. The gNB 200 may determine that the UE 100 transitions to the RRC connected state in response to alleviation of network congestion.

In step S138, the UE 100 transmits an RRC resume complete message to the gNB 200 in response to the reception of the RRC resume message of step S137. The gNB 200 receives the RRC resume complete message.

In step S139, the UE 100 transitions from the RRC inactive state to the RRC connected state.

In step S140, the gNB 200 transmits the RRC reconfiguration message including multicast reception configuration of the multicast session in which the UE 100 has participated to the UE 100. The UE 100 receives the RRC Reconfiguration message.

In step S141, the gNB 200 transmits the MBS data (multicast data) of the multicast session in which the UE 100 has participated on the MTCH.

In step S142, the UE 100 applies the multicast reception configuration of step S140 and performs multicast reception in the RRC connected state. Specifically, the UE 100 receives the MBS data (multicast data) of the multicast session participated by the UE 100 on MTCH from the gNB 200.

### (3.2.2) Second Operation Pattern

In the second operation pattern, the UE 100 sets resume cause to "MT access" or "MPS priority access" in an RRC resume related to the multicast session (multicast reception). Such an operation may be applied when the UE 100 has not received the group notification (paging message). Such an operation may be applied when the UE 100 is receiving a multicast session in the RRC inactive state, particularly, when reception quality of the multicast session deteriorates in the RRC inactive state. Such an operation may be applied when the UE 100 performs cell reselection and cannot acquire PTM configuration from the reselected cell. Such an operation may be applied when the UE 100 has received permission (instruction) for multicast reception in the RRC inactive state from the gNB 200.

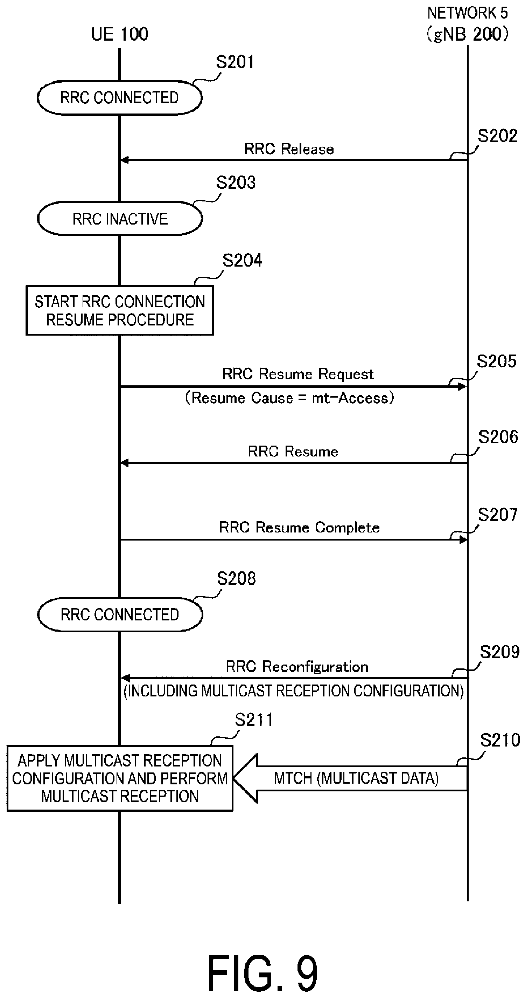

FIG. 9 is a diagram illustrating an example of the second operation pattern of the mobile communication system 1 according to the embodiment. Differences from the first operation pattern described above are mainly described herein.

In step S201, the UE 100 is in the RRC connected state in a cell of the gNB 200. It is assumed that the UE 100 has participated in a certain multicast session.

In step S202, the gNB 200 transmits an RRC release message including a suspend configuration, that is, an RRC release message for causing the UE 100 to transition to the RRC inactive state, to the UE 100. The UE 100 receives the RRC release message. The RRC release message of step S202 may include information similar to that of the first operation pattern.

In step S203, the UE 100 transitions to the RRC inactive state in response to the reception of the RRC release message of step S202. The UE 100 in the RRC inactive state may perform multicast reception.

In step S204, the UE 100 starts the RRC connection resume procedure. In the second operation pattern, the UE 100 may start the RRC connection resume procedure in response to at least one of the following conditions 1) to 3) being satisfied.
(1) Reception quality during multicast reception at the UE 100 has deteriorated.
(2) The UE 100 performs cell reselection, and the reselected cell (a cell newly camped on by the UE 100) does not provide the multicast MCCH including multicast reception configuration of the multicast session in which the UE 100 has participated.
3) Similar to the first operation pattern, the UE 100 receives a group notification (paging message) and does not hold valid PTM configuration. In addition, the multicast reception in the RRC inactive state may be permitted (or instructed).

In step S205, the UE 100 sets second information (MT access) as resume cause in the RRC resume request message and transmits the RRC resume request message to the gNB 200. The gNB 200 receives the RRC resume request message.

In step S206, in response to the reception of the RRC resume request message including the second information of step S205 as resume cause, the gNB 200 preferentially accepts the RRC resume of the UE 100 and transmits an RRC resume message to the UE 100. The UE 100 receives the RRC resume message.

In step S207, the UE 100 transmits an RRC resume complete message to the gNB 200 in response to the reception of the RRC resume message of step S206. The gNB 200 receives the RRC resume complete message.

In step S208, the UE 100 transitions from the RRC inactive state to the RRC connected state.

In step S209, the gNB 200 transmits the RRC reconfiguration message including multicast reception configuration of the multicast session in which the UE 100 has participated to the UE 100. The UE 100 receives the RRC Reconfiguration message.

In step S210, the gNB 200 transmits the MBS data (multicast data) of the multicast session in which the UE 100 has participated on the MTCH.

In step S211, the UE 100 applies the multicast reception configuration of step S140 and performs multicast reception in the RRC connected state. Specifically, the UE 100 receives the MBS data (multicast data) of the multicast session participated by the UE 100 on MTCH from the gNB 200.

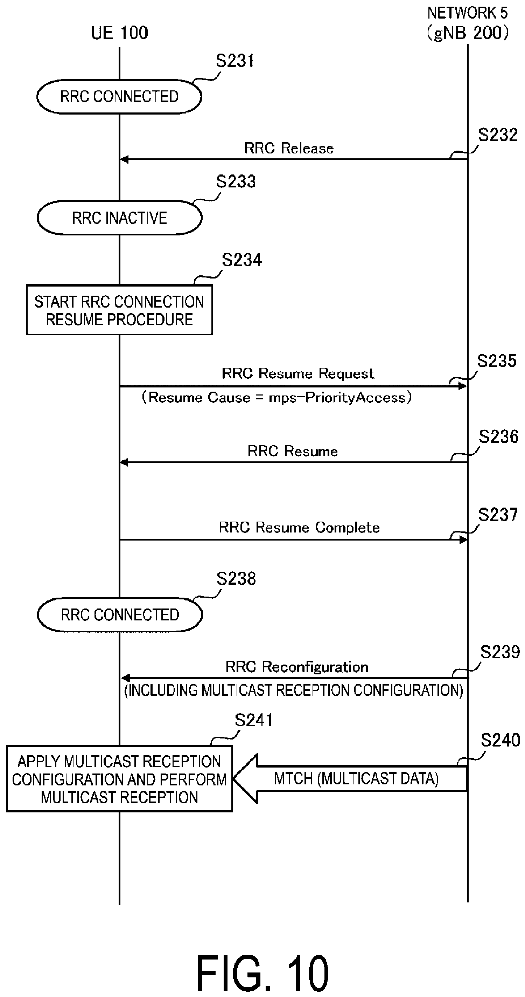

FIG. 10 is a diagram illustrating another example of the second operation pattern of the mobile communication system 1 according to the embodiment.

Operations of steps S231 to S241 are basically the same as the specific example of the operations of FIG. 9. However, in step S235, the UE 100 sets third information (MPS priority access) as resume cause in the RRC resume request message and transmits the RRC resume request message to the gNB 200. The gNB 200 receives the RRC resume request message. In step S236, the gNB 200 preferentially accepts the RRC resume of the UE 100 and transmits an RRC resume message to the UE 100 in response to the reception of the RRC resume request message including the third information in step S235 as a resume cause. The UE 100 receives the RRC resume message.

### (4) Other Embodiments

Although the multicast reception in the RRC inactive state has been mainly described in the above-described embodiments, the operations according to the above-described embodiments may also be applied to multicast reception in the RRC idle state. In the case of the RRC idle state, the above-described RRC resume is replaced with RRC establishment, and the above-described resume cause is replaced with establishment cause.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed. Also, in each flow, an order between steps may be appropriately changed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node. That is, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program for causing a computer to execute each process according to the above-described embodiments may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Further, circuits that execute the respective processes according to the above-described embodiments may be integrated, and at least a part of the UE 100 or the gNB 200 may be configured as a semiconductor integrated circuit (a chipset or an SoC: System on a Chip).

The functions realized by the apparatus according to the above-described embodiments may be implemented in circuitry or processing circuitry, including a general-purpose processor, a special-purpose processor, an integrated circuit, application specific integrated circuits (ASICs), a central processing unit (CPU), conventional circuitry, and/or a combination thereof, which are programmed to realize the described functions. The processor may include transistors and other circuits and may be considered a circuitry or a processing circuitry. The processor may be a programmed processor that executes a program stored in the memory. In the present disclosure, circuitry, units, and means are hardware that is programmed to realize the described functions, or hardware that executes the described functions. The hardware may be any hardware disclosed herein or any hardware programmed to achieve or known to perform the described functions. When the hardware is a processor that is regarded as a type of circuitry, the circuitry, means, or unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

This application claims priority to U.S. Provisional Application No. 63/540261 (filed Sep. 25, 2023), and the entire contents thereof are incorporated into the present specification.

### (5) First Supplement

Features relating to the above embodiments are supplemented below.

### (Supplement 1)

A communication method used in a mobile communication system for providing a multicast broadcast service (MBS), the communication method including the steps of:
starting, by a user equipment in an RRC inactive state, an RRC connection resume procedure with respect to a network node based on reception quality during multicast reception in the user equipment having deteriorated and/or the user equipment needing to acquire a multicast reception configuration from the network node; and
transmitting, by the user equipment, an RRC resume request message including an information element related to a cause of an RRC resume to the network node,
wherein the information element is first information indicating the RRC resume related to multicast reception, second information indicating mobile terminated (MT) access, or third information indicating multimedia priority access (MPS) priority access.

### Supplement 2

The communication method according to supplement 1,
wherein the user equipment starts the RRC connection resume procedure further based on multicast reception in the RRC inactive state being permitted by the network node, and transmits the RRC resume request message including any one of the first to third information as the information element to the network node.

### Supplement 3

The communication method according to supplement 1 or 2, further including:
receiving, by the user equipment from the network, a paging message indicating activation of a multicast session in which the user equipment has participated,
wherein the starting includes starting the RRC connection resume procedure when the user equipment does not have the multicast reception configuration corresponding to the multicast session upon receiving the paging message, and
the transmitting includes transmitting the RRC resume request message including the first information as the information element to the network node.

### Supplement 4

The communication method according to supplement 1 or 2, wherein the transmitting includes transmitting the RRC resume request message including the second information or the third information as the information element to the network node.

### Supplement 5

The communication method according to supplement 4, wherein the user equipment starts the RRC connection resume procedure and transmits the RRC resume request message including the second information or the third information as the information element to the network node, when the user equipment has not received a paging message indicating activation of a multicast session in which the user equipment has participated.

### Supplement 6

The communication method according to supplement 4 or 5, wherein the user equipment starts the RRC connection resume procedure and transmits the RRC resume request message including the second information or the third information as the information element to the network node, based on the user equipment performing multicast reception in the RRC inactive state.

### Supplement 7

The communication method according to supplement 6, wherein the user equipment starts the RRC connection resume procedure and transmits the RRC resume request message including the second information or the third information as the information element to the network node based on the user equipment performing multicast reception in the RRC inactive state and reception quality during the multicast reception having deteriorated.

### Supplement 8

The communication method according to any one of supplements 4 to 7, wherein the user equipment starts the RRC connection resume procedure and transmits the RRC resume request message including the second information or the third information as the information element to the network node, based on the user equipment being unable to acquire a multicast reception configuration from a cell reselected by cell reselection.

### Supplement 9

A user equipment used in a mobile communication system for providing a multicast broadcast service (MBS), the user equipment including:
a controller configured to start an RRC connection resume procedure with respect to a network node, based on reception quality during multicast reception in the user equipment having deteriorated and/or the user equipment needing to acquire a multicast reception configuration from the network node in an RRC inactive state; and
a transmitter configured to transmit, to the network node, an RRC resume request message including an information element related to a cause of an RRC resume,
wherein the information element is first information indicating the RRC resume related to multicast reception, second information indicating mobile terminated (MT) access, or third information indicating multimedia priority access (MPS) priority access.

### Supplement 10

A network node used in a mobile communication system for providing a multicast broadcast service (MBS), the network node including:
a receiver configured to receive, from a user equipment in an RRC inactive state, an RRC resume request message including an information element related to a cause of an RRC resume, based on reception quality during multicast reception in the user equipment having deteriorated and/or the user equipment needing to acquire a multicast reception configuration from the network node,
wherein the information element is first information indicating the RRC resume related to multicast reception, second information indicating mobile terminated (MT) access, or third information indicating multimedia priority access (MPS) priority access.

### (6) Second Supplement

### 1. Introduction

A work item regarding enhancement of MBS (eMBS) is intended to support multicast reception in the UE in the inactive state as follows:
- To define support for multicast reception by the UE in the RRC inactive state [RAN2, RAN3]
   - The PTM configuration for the UE that receives multicast in the RRC inactive state [RAN2].
   - investigating impacts of mobility and state transition of the UE that receives multicast in the RRC inactive state. (Seamless/lossless mobility is not mandatory) [RAN2, RAN3].

In this supplement, details of the RRC resume due to bad quality and causes of resume are discussed.

### 2. Discussion

### 2.1. RRC Resume Due to Bad Reception Quality

RAN2#123 agreed to introduce RSRP/RSRQ-based RRC resume as follows.

In the UE that receives multicast in the RRC inactive state, when RSRP or RSRQ measured based on an existing measurement requirement (as configured by NW) of the serving cell becomes lower than the threshold value configured by the network, the UE resumes the RRC connection. Further study is needed on whether it is necessary to address a ping-pong issue.

The threshold value can be PTM-configured per MBS session via the RRC release or the multicast MCCH message.

Based on agreements, remaining issues are discussed in the following section.

### 2.1.1. Ping-pong Issue

The agreements are obtained by capturing discussion items regarding "whether it is necessary to address the ping-pong issue and/or how to address the ping-pong issue." As scenarios for resuming a ping-pong operation, the following can be considered:
1. The UE in the inactive state with deteriorating radio quality starts RRC resume when RSRP/RSRQ becomes worse than a threshold value.
2. In response to the RRC resume request, the gNB under NW congestion transmits the RRC release with suspend config. including the RSRP/RSRQ threshold value.
3. The UE with still-deteriorated radio quality transitions to the inactive state again, and since RSRP/RSRQ immediately becomes lower than the threshold value, RRC resume is started again.

In order to avoid ping-pong in the above scenario, it can be considered that the gNB maintains the UE in the connected state or sets an appropriate RSRP/RSRQ threshold value for the UE.

In order to support such a determination, the gNB is likely to need to ascertain a radio condition and/or a reason for RRC resume (in this case, due to deterioration of radio quality) as soon as the UE requests RRC resume.

Finding 1: The gNB is likely to need to ascertain the radio condition of the UE and the reason for RRC resume when the UE requests RRC resume in order to guarantee QoS requirements.

According to discussion in RAN2 at an early stage of Release 18, it should be noted that two main motivations for supporting multicast reception in the inactive state are NW congestion mitigation and UE power consumption. Therefore, it is not reasonable that, each time the UE requests RRC resume, the gNB always keeps the UE in the connected state and configures measurement reporting.

Finding 2: Since motivations for supporting multicast reception in the inactive state are NW congestion mitigation and UE power saving, it is not reasonable to rely on measurement reporting for guaranteeing of the QoS requirements.

In consideration of the above findings, it is useful that, when the UE starts the RRC resume due to deterioration of reception quality in the RRC resume procedure, that is, in the RRC resume request or an RRC resume complete, the UE reports measurement results. Another option is that the UE notifies deterioration of radio wave state in the resume causes. With such information, the gNB can make an appropriate determination as to whether to maintain the UE in the connected state for QoS guarantee.

Proposal 1: RAN2 should agree that measurement results are reported in the RRC resume procedure, or that a new resume cause "Multicast quality" is introduced.

2.1.2. Validity of RSRP/RSRQ Threshold Configured by the RRC release RAN2 agreed that "a threshold value can be configured in the PTM configuration per MBS session based on an the RRC release or the multicast MCCH message." In the case of dedicated configuration provided by RRC release, many configurations are valid until a corresponding timer expires. For example, dedicated frequency priority is valid until T320 expires. This occurs regardless of cell reselection, and after the UE reselects a target cell, dedicated configuration provided from a source cell is valid.

Finding 3: According to current specifications, many dedicated configurations are valid until the timer expires regardless of the cell reselection.

As for the RSRP/RSRQ threshold value, when it is valid after the cell reselection, an issue is likely to occur assuming the following conditions:
- In the source cell, since the PTM is transmitted with a low MCS, the UE has set a low RSRP threshold value in order to guarantee certain reception quality.
- In a target cell after the cell reselection, the PTM is transmitted with a higher MCS, but the UE keeps applying the old RSRP threshold value.
- As a result, the UE will cause an MTCH reception error even though RSRP is still better than an old threshold value.

In order to avoid this issue, considering that PTM transmission of NR MBS is cell-specific, the RSRP/RSRQ threshold value should be cell-specific. That is, when the UE reselects a different cell, an old RSRP/RSRQ threshold value should be discarded.

Proposal 2: RAN2 should agree that the RSRP/RSRQ threshold value is discarded upon the cell reselection.

Another issue that may be considered in processing the RSRP/RSRQ threshold value is that, when threshold values are provided from both the RRC release and the multicast MCCH, the UE needs to determine which threshold value should be applied. In a current specification, generally, dedicated configuration provided by the RRC release is prioritized over a configuration provided by an SIB. However, in the case of multicast reception in the inactive state, RAN2 agreed that "In a case in which it is necessary to change the PTM configuration, MCCH is used when it is necessary to indicate the PTM configuration," that is, the PTM configuration provided by the RRC release is likely to be changed by the PTM configuration provided by the multicast MCCH. This means that, since the RSRP/RSRQ threshold value is overwritten by the multicast MCCH, threshold value cannot be configured as a UE-specific configuration, that is, a TMGI-specific configuration.

Proposal 3: RAN2 needs to confirm that the PTM configuration including the RSRP/RSRQ threshold value provided by the RRC release is always overwritten by configuration provided by the multicast MCCH, that is, there is no UE-specific configuration for multicast reception in the inactive state.

### 2.1.3. Other Confirmation Matters

RAN2#123 agreed that "for the UE that receives multicast in the RRC inactive state, when measured RSRP or RSRQ[...] of the serving cell becomes lower than a threshold value [...], the UE resumes the RRC connection." The threshold value of RSRP/RSRQ is introduced for QoS guarantee of multicast reception in the inactive state.

On the other hand, when the multicast session is deactivated by the network, the UE in an inactive state may not receive MTCH (or may temporarily not receive data) when the session is deactivated. In this case, since the UE is regarded as the same as a legacy UE in the inactive state, RRC resume due to bad quality (the RSRP/RSRQ threshold value) is not necessary. Although the above agreements have already been suggested, it is necessary to confirm that, even when RSRP/RSRQ deteriorates below a threshold value, a UE in an inactive state does not start the RRC resume when a multicast session is inactive (deactivated) (or when there is temporarily no data).

Proposal 4: RAN2 needs to confirm that the UE in the inactive state does not start the RRC resume even when RSRP/RSRQ becomes worse than the threshold value in a case in which the multicast session is deactivated (or there is temporarily no data).

In RAN2#123, RAN2 has discussed whether the threshold value can be based on BLER, but finally RAN2 has determined that RSRP/RSRQ is adopted.

On the other hand, in Release 17, it was a common understanding of RAN2 that single frequency network (SFN) is deployable, for example, only in the DU due to NW implementation. In SFN between cells, by combining receptions from MTCH of different cells, reception quality is stable even at a cell edge. However, RSRP/RSRQ is cell-specific, and deteriorates at a cell edge when leaving the SFN. Therefore, the RSRP/RSRQ threshold value does not work well in SFN deployment, but the BLER threshold value can avoid such an issue.

Proposal 5: RAN2 needs to confirm that SFN (single frequency network) allowed in Release 17 by the NW implementation does not operate with the RSRP/RSRQ threshold value in Release 18.

### 2.2. Resume Cause

RAN2#123 agreed that, in Release 18, for RRC resume due to some reasons as well as deterioration of reception quality discussed in the previous section, existing resume causes are reused. However, analysis is still needed regarding which existing resume cause is applied and whether a new resume cause is truly unnecessary.

Unless an issue is specified in using one of existing resume causes, a new resume cause is not introduced for a UE receiving MC in an inactive state when resuming is performed due to bad quality or lack of the SIBx/the PTM configuration.

Currently, 11 resume causes are defined with five spare fields below. ResumeCause ::= ENUMERATED {emergency, highPriorityAccess, mt-Access, mo-Signalling, mo-Data, mo-VoiceCall, mo-VideoCall, mo-SMS, rna-Update, mps-PriorityAccess, mcs-PriorityAccess, spare1, spare2, spare3, spare4, spare5}

Similarly to Finding 2 above, one of motivations of the multicast reception in the inactive state is network congestion mitigation. Therefore, the analysis needs to consider a case in which the network becomes congested.

Finding 4: Mapping between RRC resume for multicast reception and existing resume causes needs to consider a congestion condition of the network.

Typical determinations of the gNB when receiving the RRC resume request under network congestion are classified as follows:
- always accept an emergency;
- prioritize highPriorityAccess, mps-PriorityAccess, and mcs-PriorityAccess;
- accept mt-Access and mo-Signalling (as much as possible);
- may reject mo-Data, mo-VoiceCall, mo-VideoCall, and mo-SMS;
- respond a new RNA with RRC release for rna-Update.

Finding 5: By resume, the gNB can determine whether to accept, reject, or release with a new RNA in response to the RRC resume request particularly in the case of NW congestion.

RAN2 agreed that the UE starts RRC resume in two cases: "due to bad quality" or "due to lack of the SIBx/the PTM configuration." From a viewpoint of impact on a network load, features of these reasons differ as follows:

- As discussed in Section 2.1.1, in the case of the RRC resume due to bad quality, when the UE is released while still being in the inactive state again, the QoS requirements are no longer guaranteed, and thus the UE needs to be maintained in the connected state. Considering that the UE needs to be maintained in the connected state, the UE does not consume additional downlink resources (because the UE only receives PTM already transmitted to other UEs), but consumes uplink resources (such as HARQ ACK). When a network is congested, the UE consumes slightly more resources compared to the multicast reception in the inactive state, but still this may be prioritized over a resume request of a unicast service. In other words, the gNB may prioritize the RRC resume request for multicast reception over the RRC resume request for unicast reception, but the gNB may still reject the RRC resume request due to severe congestion.

- In the case of the RRC resume due to lack of the SIBx/the PTM configuration, when a radio condition is good, the UE can be released in the PTM configuration, that is, in the RRC resume, to receive the multicast session. Therefore, this is "light" in terms of network congestion, that is, the UE consumes almost no downlink resource/uplink resource. In other words, the NW can immediately accept the RRC resume request on the premise of the RRC release accompanied by the PTM configuration of RRC resume.

Finding 6: Since the gNB affects the NW congestion to some extent in order to maintain the UE in the connected state when the NW is congested, the gNB may reject RRC resume due to bad quality.

Finding 7: Due to lack of the SIBx/the PTM configuration, the gNB can accept the RRC resume and immediately release the UE with the PTM configuration. This is because the NW congestion is not affected.

In consideration of the above discussion, the RRC resume due to bad quality is likely to be mapped to any of mo-Data, mo-VoiceCall, mo-VideoCall, or mo-SMS. However, since multicast reception in connected does not require additional PDSCH resources (that is, PTM is already provided to other UEs), current gNB implementation with respect to such existing resume cause is likely to be affected when a different type of communication (that is, multicast reception only) is mapped to an existing resume cause.

For RRC resume due to lack of the SIBx/the PTM configuration, since there is a new intent of RRC resume accompanied by the PTM configuration, there is no resume cause to be mapped. Although a similar gNB determination is assumed in rna-Update, the gNB provides RNA instead of the PTM configuration for RRC resume. That is, the gNB cannot transmit the RRC release with the PTM configuration in response to the RRC resume request, and the gNB may erroneously reject the UE request even though the UE only requests the PTM configuration update without impact on NW congestion.

Finding 8: There is no existing resume cause that conforms to a gNB determination expected in the case of the RRC resume request due to bad quality or due to lack of the SIBx/the PTM configuration.

RAN2 has actually identified a possibility of new resume causes in the following discussion.

Resume causes:
1. Multicast quality
2. Multicast configuration

The two resume causes can easily solve all issues discussed above without potentially impacting current gNB implementation. As also discussed above, the two resume causes are effective for the gNB to appropriately derive different results. Therefore, two new resume causes should be introduced appropriately.

Since it is highly expected that 3GPP will start consideration of 6G from Release 20, it is expected that 5G NR evolves only for two releases in the future (that is, up to Release 20 at most). Considering a history of additional resume in past releases, three resume in Release 18 are sufficient.

Proposal 6: RAN2 should agree on a new resume cause "Multicast quality" configured when RRC resume is started due to bad quality. The determination of the expected gNB is prioritized over MO data, or the like.

Proposal 7: RAN2 should agree on a new resume cause "multicast configuration" configured when RRC resume is started due to lack of the SIBx/the PTM configuration. The determination of the expected gNB is to respond with an RRC release accompanied by the PTM configuration.

### REFERENCE SIGNS

1: Mobile communication system
5: Network
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method used in a mobile communication system for providing a multicast broadcast service (MBS), the communication method comprising the steps of:
starting, by a user equipment in a radio resource control (RRC) inactive state that is participating in a multicast session, an RRC connection resume procedure with respect to a network node, based on reception quality falling below a threshold value; and
transmitting, by the user equipment, an RRC resume request message comprising an information element related to a cause of an RRC resume to the network node,
wherein the information element is information indicating mobile terminated (MT) access or information indicating multimedia priority access (MPS) priority access.

2. A communication method used in a mobile communication system for providing a multicast broadcast service (MBS), the communication method comprising the steps of:
starting, by a user equipment in an RRC inactive state, an RRC connection resume procedure with respect to a network node, based on reception quality during multicast reception in the user equipment having deteriorated and/or the user equipment needing to acquire a multicast reception configuration from the network node; and
transmitting, by the user equipment, an RRC resume request message comprising an information element related to a cause of an RRC resume to the network node,
wherein the information element is first information indicating the RRC resume related to multicast reception, second information indicating mobile terminated (MT) access, or third information indicating multimedia priority access (MPS) priority access.

3. The communication method according to claim 2, wherein
the user equipment starts the RRC connection resume procedure further based on multicast reception in the RRC inactive state being permitted by the network node, and transmits the RRC resume request message comprising any one of the first to third information as the information element to the network node.

4. The communication method according to claim 2, further comprising:
receiving, by the user equipment from the network, a paging message indicating activation of a multicast session in which the user equipment has participated from the network node,
wherein the starting comprises starting the RRC connection resume procedure when the user equipment does not have the multicast reception configuration corresponding to the multicast session upon receiving the paging message, and
the transmitting comprises transmitting the RRC resume request message comprising the first information as the information element to the network node.

5. The communication method according to claim 2, wherein
the transmitting comprises transmitting the RRC resume request message comprising the second information or the third information as the information element to the network node.

6. The communication method according to claim 5,wherein
the user equipment starts the RRC connection resume procedure and transmits the RRC resume request message comprising the second information or the third information as the information element to the network node, when the user equipment has not received a paging message indicating activation of a multicast session in which the user equipment has participated.

7. The communication method according to claim 5, wherein
the user equipment starts the RRC connection resume procedure and transmits the RRC resume request message comprising the second information or the third information as the information element to the network node, based on the user equipment performing multicast reception in the RRC inactive state.

8. The communication method according to claim 7, wherein
the user equipment starts the RRC connection resume procedure and transmits the RRC resume request message comprising the second information or the third information as the information element to the network node, based on the user equipment performing multicast reception in the RRC inactive state and reception quality during the multicast reception having deteriorated.

9. The communication method according to claim 5, wherein the user equipment starts the RRC connection resume procedure and transmits the RRC resume request message comprising the second information or the third information as the information element to the network node, based on the user equipment being unable to acquire a multicast reception configuration from a cell reselected by cell reselection.

10. A user equipment used in a mobile communication system for providing a multicast broadcast service (MBS), the user equipment comprising:
a controller configured to start an RRC connection resume procedure with respect to a network node, based on reception quality during multicast reception in the user equipment having deteriorated and/or the user equipment needing to acquire a multicast reception configuration from the network node in an RRC inactive state; and
a transmitter configured to transmit, to the network node, an RRC resume request message comprising an information element related to a cause of an RRC resume,
wherein the information element is first information indicating the RRC resume related to multicast reception, second information indicating mobile terminated (MT) access, or third information indicating multimedia priority access (MPS) priority access.

11. A network node used in a mobile communication system for providing a multicast broadcast service (MBS), the network node comprising:
a receiver configured to receive, from a user equipment in an RRC inactive state, an RRC resume request message comprising an information element related to a cause of an RRC resume, based on reception quality during multicast reception in the user equipment having deteriorated and/or the user equipment needing to acquire a multicast reception configuration from the network node,
wherein the information element is first information indicating the RRC resume related to multicast reception, second information indicating mobile terminated (MT) access, or third information indicating multimedia priority access (MPS) priority access.
